# EUROPEAN PATENT APPLICATION

(11) **EP 3 627 462 A1**
(43) Date of publication of application: **25.03.2020**
(21) Application number: 18802134.9
(22) Date of filing: 18.05.2018
(51) Int. Cl.: G07F 17/12

(54) **SMART CABINET SYSTEM AND CONTROL METHOD THEREFOR**

(30) Priority: 19.05.2017 CN 201710358326
(71) Applicant: Wei, Tao, Nanning, Guangxi 530011 (CN); Huang, Binwu, Liuzhou, Guangxi 545007 (CN); Wu, Hengyuan, Nanning, Guangxi 530012 (CN)
(72) Inventor: Wei, Tao, Nanning, Guangxi 530011 (CN); Huang, Binwu, Liuzhou, Guangxi 545007 (CN); Wu, Hengyuan, Nanning, Guangxi 530012 (CN)
(74) Representative: Vitina, Maruta
(86) International application number: PCT/CN2018/000182
(87) International publication number: WO 2018/209975

(57) **Abstract**

A smart cabinet system, comprising a cabinet (8), an object information input module (1), an object position memory module (2), an object position display module (3), a central control module (4). In the control method, an object information is input into a central control module (4) through an object information input module (1), and a position of the object is input into the central control module (4)through an object position memory module (2) after the object is placed into the cabinet to establish an association relationship with the object information; and the position of the object is displayed by an object position display module (3) after the object information is retrieved by the central control module (4)upon picking up.

## Description

### TECHNICAL FIELD

The present disclosure relates to a logistics device and a control method thereof, in particular to a smart cabinet system and a control method thereof.

### BACKGROUND

With the development of society, logistics industry has developed rapidly. However, the existing logistics cabinets mainly use the traditional letter box mode, and each object occupies a single drawer or box in the logistics cabinet. Therefore, the cabinet is not well utilized, which is far from meeting the needs of logistics. For the logistics cabinet where objects can be collected and stacked, although the utilization rate is improved, in the process of pickup by the recipient, the object is often picked up by the wrong recipient due to manual object identification errors caused.

### SUMMARY

The technical problem to be solved by the present disclosure is to provide a smart cabinet system and a control method thereof to improve the accuracy and utilization rate of the logistics.

The technical solution for solving the above technical problem is: a smart cabinet system comprising a cabinet, the cabinet being provided with a plurality of storage areas, wherein the smart cabinet system further comprises an object information input module, an object position memory module, an object position display module, a central control module; the central control module is connected respectively with the object information input module, the object position memory module and the object position display module; the object information input module is configured to input an object information into the central control module, and the object position memory module is configured to store a position of the object after being placed into the cabinet and input the position into the central control module to establish an association relationship with the object information; and the object position display module is configured to display the position of the object after the central control module retrieves the object information upon picking up.

Further, the object information input module comprises a manual input device or a barcode scanning device or an RFID chip reading device.

Further, the object position memory module comprises a weighing device or a machine vision device or a coded wireless clip, a wireless hook; the weighing device comprises a total weighing device mounted at a bottom of the entire cabinet, a coded regional weighing device mounted respectively in each storage area of the cabinet, one or more coded secondary regional weighing devices mounted in a same storage area of the cabinet; the machine vision device, the wireless clip and the wireless hook are respectively mounted on a frame of the cabinet; the weighing device, the machine vision device, the wireless clip, and the wireless hook are respectively connected to the central control module.

Further, the object position display module comprises a light display lamp or a movable pointing light lamp arm mounted on a frame of the cabinet, or a vertical and horizontal coordinates display lamp row mounted on vertical and horizontal frames of the cabinet, or a sound and light display lamp mounted on the wireless clip and the wireless hook.

Further, the smart cabinet system further comprises a pickup monitoring and error correction system, the pickup monitoring and error correction system is connected to the central control module, and the pickup monitoring and error correction system is configured to raise an alarm when the object taken upon picking up does not match an information recorded by the object position memory module or an object is abnormally added.

Further, the smart cabinet system further comprises an olfactory sensor for distinguishing dangerous goods, and the olfactory sensor is connected to the central control module is connected; the central control module is also connected with a dangerous goods olfactory alarm; the central control module is also connected to the Internet and the Internet is connected to the Internet of Things; and the smart cabinet system is provided with an APP application platform and Wifi.

The present disclosure provides a control method of a smart cabinet system, wherein an object information is input into a central control module through an object information input module, and a position of the object is input into the central control module through an object position memory module after the object is placed into the cabinet to establish an association relationship with the object information; and the position of the object is displayed by an object position display module after the object information is retrieved by the central control module upon picking up.

Further, the method comprises the following specific steps:
A. delivery stage: upon delivery, the object information is read by a deliveryman with an object information reading device, after the object is placed into the cabinet, a position information of the object is obtained by the object position memory module, and the information and the position information are simultaneously input into the central control module to establish an association relationship; the position information indicating a location of the cabinet where the object is located is sent to the recipient by the central control module according to the object information, and in case that the cabinet is provided with a cabinet door, a password for opening the cabinet door is randomly generated which uniquely corresponds to an information of the recipient, that is, the cabinet door being opened with a password can correspond to the cabinet door being opened by a certain recipient;
B. pickup stage: when a recipient picks up an object, in case that the cabinet is provided with a cabinet door, the password given by the central control module is used to open the cabinet door, a position of the object is indicated by the object position display module to the recipient object accordingly, a light display lamp or a movable pointing light lamp arm automatically points to the position of the object, or a light of a vertical and horizontal coordinates display lamp row on vertical and horizontal frames of the cabinet is turned on correspondingly, or a sound and light display lamp on a wireless clip and a wireless hook is turned on, indicating the recipient to quickly find his own object, the recipient leaves or close the cabinet door in case that the cabinet is provided with a cabinet door after confirming that he picks his object.

Further, in the delivery stage of step A, the step that the position information of the object is obtained by the object position memory module comprises that when the object is placed into the cabinet, a position where the object is placed is recorded by a regional weighing device located in an area where the object is pressed and one or more secondary regional weighing devices mounted in a same storage area of the cabinet according to codes of the weighting devices; or an image information of delivery is recorded by a machine vision device to obtain vertical and horizontal coordinates of the object to record the position of the object; or the object is fixed by a wireless clip and a wireless hook to record the position of the object according to codes of the wireless clip and the wireless hook.

Further, step B further comprises that the weight of the object picked up is automatically approved by the regional weighing device and the total weighing device, or the object information of the object picked up is automatically approved by the machine vision device, the wireless clip and the wireless hook; if a weight of the object picked up by the recipient is consistent with the recipient and the weight information of his object registered by the central control module, or the image information recorded by the machine vision device is consistent with the recipient and the object information of his object, or the code information of the wireless clip and the wireless hook that are opened is consistent with the recipient and the object information of his object, the central control module sends a message to the recipient indicating the object is successfully picked up; if not, the central control module sends a message to the recipient indicating an error is occurred during pickup and issues a password information for opening the cabinet door again and requests the recipient to pick up the object again; if the recipient refuses to execute, the central control module controls a pickup monitoring and error correction system to issue an alarm message.

Further, various information formed in steps A to B are sent to a handheld terminal of the recipient via the Internet or the Internet of Things; after the handheld terminal of the recipient is registered and approved on an APP application platform of the smart cabinet system or the recipient enters a password on the APP, the handheld terminal of the recipient can be automatically identified in an area near the cabinet.

By adopting the above structure, compared with the prior art, the smart cabinet system of the present disclosure and the control method thereof have the following beneficial effects:

### 1. Improve the accuracy of logistics:

The smart cabinet system of the present disclosure comprises a cabinet, an object information input module, an object position memory module, an object position display module and a central control module, wherein the cabinet is provided with a plurality of storage areas, and the central control module is respectively connected to the object information input module, the object position memory module and the object position display module. In the present disclosure, the object information is input into the central control module through the object information input module, and the position of the object is stored by the object position memory module after being placed into the cabinet and input the position into the central control module to establish an association relationship with the object information. Upon picking up, the object position display module displays the position of the object after the central control module retrieves the object information, so that the recipient can quickly and accurately pick up the object. Therefore, the present disclosure well controls the error rate of the pickup and greatly improves the accuracy of the logistics.

### 2. Improve the utilization rate of logistics:

Since the present disclosure comprises a cabinet, the cabinet is provided with a plurality of storage areas, and a plurality of objects can be stacked in each storage area, thereby avoiding the situation that an object occupies a drawer or a box and greatly improving the usage rate thereof.

### 3. Improve logistics efficiency:

The smart cabinet system of the present disclosure comprises a cabinet, an object information input module, an object position memory module, an object position display module and a central control module. In use, the object information is input into the central control module through the object information input module, and the position of the object is stored by the object position memory module after being placed into the cabinet and input the position into the central control module to establish an association relationship with the object information. Upon picking up, the object position display module displays the position of the object after the central control module retrieves the object information, so that the recipient can quickly and accurately pick up the object, and the logistics efficiency is relatively high.

### 4. Wide range of applications:

Since the existing logistics cabinet is exclusively used, and at the same time, the exclusive use of the logistics cabinet is limited by space, the types of express objects are limited. However, the smart cabinet system of the present disclosure can be used by the public widely. In addition to the use of the express logistics business, it can also be suitable for storing pieces and articles in the warehouse, storing books in the library, etc., and the scope of application thereof is relatively wide.

### 5. Safe and reliable:

The cabinet of the present disclosure is equipped with a code lock, and further comprises a pickup monitoring and error correction system which is connected with the central control module. During pickup, pickup monitoring and error correction system raises an alarm when the reduced weight obtained by the weighing devices does not match with the weight of the object, or the information of the object picked up does not match with the information recorded by the machine vision device, the wireless clip and the wireless hook. Therefore, the object is very safe and reliable in this smart cabinet system.

The technical features of the smart cabinet system and the control method thereof according to the present disclosure will be further described below with reference to the accompanying drawings and embodiments.

### BRIEF DESCRIPTION OF THE DRAWINGS

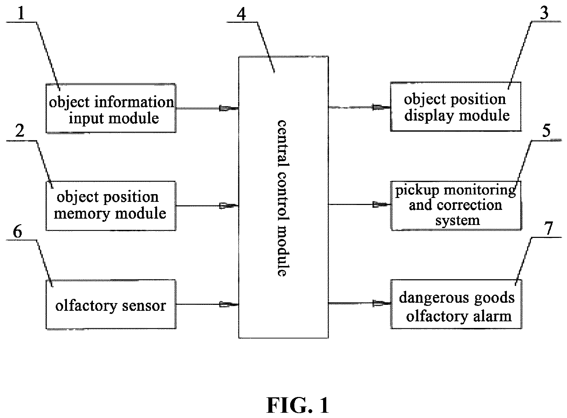

Figure 1 is a functional block diagram of the smart cabinet system of the present disclosure;

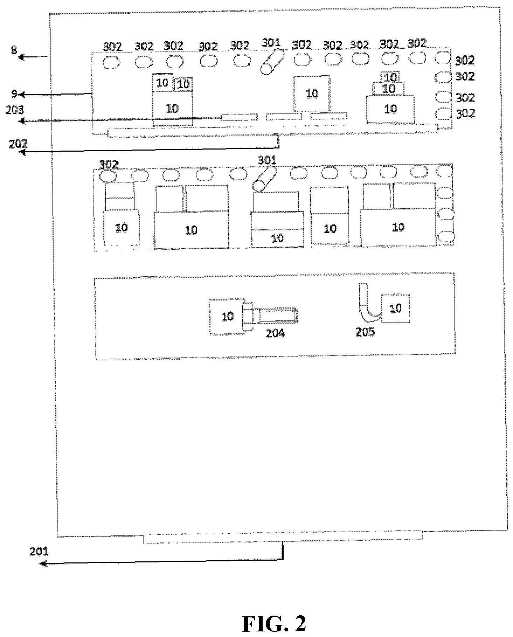

Figure 2 is a schematic view of the smart cabinet system of the present disclosure as described in Embodiment 4.

### Reference numeral:

In the above figures, the reference numerals are as follows:
1-object information input module,
2-object position memory module,
201-total weighing device, 202-regional weighing device, 203- secondary regional weighing device, 204-wireless clip, 205-wireless hook,
3-object position display module, 301-movable pointing light lamp arm, 302-vertical and horizontal coordinates display lamp row,
4-central control module, 5-pickupmonitoring and correction system, 6- olfactory sensor, 7-dangerous goods olfactory alarm,
8-cabinet, 9-storage area, 10-object.

### DETAILED DESCRIPTION OF EMBODIMENTS

### Embodiment 1:

A smart cabinet system, comprising a cabinet 8, an object information input module 1, an object position memory module 2, an object position display module 3, a central control module 4, a pickup monitoring and error correction system 5. The cabinet 8 is provided with a plurality of storage areas 9, and the central control module 4 is respectively connected with the object information input module 1, the object position memory module 2, the object position display module 3 and the pickup monitoring and error correction system 5.

The object information input module 1 is configured to input object information into the central control module 4, and the object information input module 1 comprises a manual input device.

The object position memory module 2 is configured to store a position of the object after being placed into the cabinet and input the position into the central control module 4 to establish association relationship with the object information; the object position memory module 2 comprises a weighing device; the weighing device comprises a total weighing device 201 mounted at a bottom of the entire cabinet, a coded regional weighing device 202 mounted respectively in each storage area 9 of the cabinet, one or more coded secondary regional weighing devices 203mounted in a same storage area of the cabinet; the weighing devices are respectively connected to the central control module 4. When the object is placed into the cabinet, a position where the object is placed is recorded by a regional weighing device located in an area where the object is pressed and one or more secondary regional weighing devices mounted in a same storage area of the cabinet according to codes of the weighting devices, the position information of the object is input into the central control module 4.

The object position display module 3 is configured to display the position of the object after the object control module 4 retrieves the object information, and the object position display module 3 comprises a light display lamp mounted on a frame of the cabinet. When the recipient picks up the object, the object position display module 3 indicates the location of the object to the recipient accordingly, and the light display lamp automatically points to the position of the object, so that the recipient can quickly find his own object.

The pickup monitoring and error correction system 5 is configured to raise an alarm when the object taken upon picking up does not match an information recorded by the object position memory module 2 or an object is abnormally added. That is, the pickup monitoring and error correction system 5 raises an alarm when the reduced weight obtained by the weighing device upon picking up does match with the object information or an object is abnormally added. The pickup monitoring and error correction system 5 comprises an alarm.

The smart cabinet system further comprises an olfactory sensor 6 for distinguishing dangerous goods, and the olfactory sensor is connected to the central control module 4; the central control module 4 is also connected with a dangerous goods olfactory alarm 7, the dangerous goods olfactory alarm 7 can be replaced by the pickup monitoring and error correction system 5.

The central control module 4 is also connected to the Internet and the Internet is connected to the Internet of Things; and the smart cabinet system is provided with an APP application platform and Wifi, so that the present disclosure also has the following functions:
(1) The deliveryman can apply for the password for opening the cabinet on the webpage or APP application platform after registration;
(2) The deliveryman can check the status of the express object in the cabinet on the webpage or APP application platform after registration;
(3) The recipient can check the status of the express object in the cabinet on the webpage or APP application platform after registration;
(4) The recipient can query the password for opening the cabinet received on the webpage or APP application platform after registration;
(5) Access to the logistics network of the logistics company is available.

### Embodiment 2:

A smart cabinet system, comprising a cabinet 8, an object information input module 1, an object position memory module 2, an object position display module 3, a central control module 4, a pickup monitoring and error correction system 5. The cabinet 8 is provided with a plurality of storage areas 9, and the central control module 4 is respectively connected with the object information input module 1, the object position memory module 2, the object position display module 3 and the pickup monitoring and error correction system 5.

The object information input module 1 is configured to input object information into the central control module 4, and the object information input module 1 comprises a barcode scanning input device.

The object position memory module 2 is configured to store a position of the object after being placed into the cabinet and input the position into the central control module 4 to establish association relationship with the object information; the object position memory module 2 comprises a machine vision device; the machine vision device comprises a camera or a monitoring device mounted on a frame of the cabinet; the machine vision device is connected with the central control module 4. When the objected is place into the cabinet, an image information of the placement is recorded by the machine vision device to obtain the vertical and horizontal coordinates of the object and record a position where the object is placed, and the position information of the object is input into the central control module 4.

The object position display module 3 is configured to display the position of the object after the object control module 4 retrieves the object information, and the object position display module 3 comprises a movable pointing light lamp arm 301 or a vertical and horizontal coordinates display lamp row 302mounted on a frame of the cabinet. When the recipient picks up the object, the object position display module 3 indicates the location of the object to the recipient accordingly, and the light of the movable pointing light lamp arm automatically points to the position of the object or the vertical and horizontal coordinates display lamp row is turned on, so that the recipient can quickly find his own object.

The pickup monitoring and error correction system 5 is configured to raise an alarm when the object taken upon picking up does not match an information recorded by the object position memory module 2.That is, the pickup monitoring and error correction system 5 raises an alarm when the object picked up does match with the image information of the machine vision device. The pickup monitoring and error correction system 5 comprises an alarm.

The smart cabinet system further comprises an olfactory sensor 6 for distinguishing dangerous goods, and the olfactory sensor is connected to the central control module 4; the central control module 4 is also connected with a dangerous goods olfactory alarm 7, the dangerous goods olfactory alarm 7 can be replaced by the pickup monitoring and error correction system 5.

The central control module 4 is also connected to the Internet and the Internet is connected to the Internet of Things; and the smart cabinet system is provided with an APP application platform and Wifi, so that the present disclosure also has the following functions:
(1) The deliveryman can apply for the password for opening the cabinet on the webpage or APP application platform after registration;
(2) The deliveryman can check the status of the express object in the cabinet on the webpage or APP application platform after registration;
(3) The recipient can check the status of the express object in the cabinet on the webpage or APP application platform after registration;
(4) The recipient can query the password for opening the cabinet received on the webpage or APP application platform after registration;
(5) Access to the logistics network of the logistics company is available.

### Embodiment 3:

A smart cabinet system, comprising a cabinet, an object information input module 1, an object position memory module 2, an object position display module 3, a central control module 4, a pickup monitoring and error correction system 5. The cabinet is provided with a plurality of storage areas, and the central control module 4 is respectively connected with the object information input module 1, the object position memory module 2, the object position display module 3 and the pickup monitoring and error correction system 5.

The object information input module 1 is configured to input object information into the central control module 4, and the object information input module 1 comprises a RFID chip reading device.

The object position memory module 2 is configured to store a position of the object after being placed into the cabinet and input the position into the central control module 4 to establish association relationship with the object information; the object position memory module 2 comprises a coded wireless clip 204 and a coded wireless hook 205 for fixing the object; the wireless clip 204 and the wireless hook 205 are mounted on the frames of the cabinet and are connected with the central control module 4. When the objected is place on the wireless clip 204 and the wireless hook 205, a position where the object is placed is recoded according to the codes on the wireless clip and the wireless hook, and the position information of the object is input into the central control module 4. The wireless clip and the wireless hook can be charged in a wired or wireless manner, and will raise sound and light alarms and become invalid when taken out of place.

The object position display module 3 is configured to display the position of the object after the object control module 4 retrieves the object information, and the object position display module 3 comprises a sound and light display lamp mounted on the wireless clip and the wireless hook. When the recipient picks up the object, the object position display module 3 indicates the location of the object to the recipient accordingly, and a sound and light display lamp mounted on the wireless clip and the wireless hook is turned on, so that the recipient can quickly find his own object.

The pickup monitoring and error correction system 5 is configured to raise an alarm when the object taken upon picking up does not match an information recorded by the object position memory module 2.That is, the pickup monitoring and error correction system 5 raises an alarm when the code information of the wireless clip and the wireless hook that are opened does match with the recipient and the object information of his object. The pickup monitoring and error correction system 5 comprises an alarm.

The smart cabinet system further comprises an olfactory sensor 6 for distinguishing dangerous goods, and the olfactory sensor is connected to the central control module 4; the central control module 4 is also connected with a dangerous goods olfactory alarm 7, the dangerous goods olfactory alarm 7 can be replaced by the pickup monitoring and error correction system 5.

The central control module 4 is also connected to the Internet and the Internet is connected to the Internet of Things; and the smart cabinet system is provided with an APP application platform and Wifi, so that the present disclosure also has the following functions:
(1) The deliveryman can apply for the password for opening the cabinet on the webpage or APP application platform after registration;
(2) The deliveryman can check the status of the express object in the cabinet on the webpage or APP application platform after registration;
(3) The recipient can check the status of the express object in the cabinet on the webpage or APP application platform after registration;
(4) The recipient can query the password for opening the cabinet received on the webpage or APP application platform after registration;
(5) Access to the logistics network of the logistics company is available.

As an alternative to the present embodiment, the object position memory module 2 may comprise only the coded wireless clip 204 or the coded wireless hook 205.

### Embodiment 4:

A smart cabinet system, comprising a cabinet 8, an object information input module 1, an object position memory module 2, an object position display module 3, a central control module 4, a pickup monitoring and error correction system 5. The cabinet 8 is provided with a plurality of storage areas 9, and the central control module 4 is respectively connected with the object information input module 1, the object position memory module 2, the object position display module 3 and the pickup monitoring and error correction system 5.

The object information input module 1 is configured to input object information into the central control module 4, and the object information input module 1 comprises a manual input device or a barcode scanning device or a RFID chip reading device.

The object position memory module 2 is configured to store a position of the object after being placed into the cabinet and input the position into the central control module 4 to establish association relationship with the object information; the object position memory module 2 comprises a weighing device and a coded wireless clip 204 and a coded wireless hook 205 for fixing the object; the weighing device comprises a total weighing device 201 mounted at a bottom of the entire cabinet, a coded regional weighing device 202 mounted respectively in each storage area 9 of the cabinet, three coded secondary regional weighing devices 203mounted in a same storage area of the cabinet; the weighing devices are respectively connected to the central control module 4. when the object is placed into the cabinet, a position where the object is placed is recorded by a regional weighing device located in an area where the object is pressed and three secondary regional weighing devices mounted in a same storage area of the cabinet according to codes of the weighting devices, the position information of the object is input into the central control module 4.

The wireless clip 204 and the wireless hook 205 are mounted on the frames of another storage area of the cabinet and are connected with the central control module 4. When the objected is place on the wireless clip 204 and the wireless hook 205, a position where the object is placed is recoded according to the codes on the wireless clip and the wireless hook, and the position information of the object is input into the central control module 4.

The object position display module 3 is configured to display the position of the object after the object control module 4 retrieves the object information, and the object position display module 3 comprises a movable pointing light lamp arm 301 or a vertical and horizontal coordinates display lamp row 302 mounted on a frame of the storage area where the weighing devices are provided of the cabinet, and further comprises a sound and light display lamp mounted on the wireless clip and the wireless hook. When the recipient picks up the object, the light of the movable pointing light lamp arm automatically points to the position of the object or the vertical and horizontal coordinates display lamp row is turned on, and a sound and light display lamp mounted on the wireless clip and the wireless hook is turned on, so that the recipient can quickly find his own object.

The pickup monitoring and error correction system 5 is configured to raise an alarm when the object taken upon picking up does not match an information recorded by the object position memory module 2 or an object is abnormally added. That is, the pickup monitoring and error correction system 5 raises an alarm when the reduced weight obtained by the weighing device upon picking up does match with the object information or an object is abnormally added. The pickup monitoring and error correction system 5 comprises an alarm.

The smart cabinet system further comprises an olfactory sensor 6 for distinguishing dangerous goods, and the olfactory sensor is connected to the central control module 4; the central control module 4 is also connected with a dangerous goods olfactory alarm 7, the dangerous goods olfactory alarm 7 can be replaced by the pickup monitoring and error correction system 5.

The central control module 4 is also connected to the Internet and the Internet is connected to the Internet of Things; and the smart cabinet system is provided with an APP application platform and Wifi, so that the present disclosure also has the following functions:
(1) The deliveryman can apply for the password for opening the cabinet on the webpage or APP application platform after registration;
(2) The deliveryman can check the status of the express object in the cabinet on the webpage or APP application platform after registration;
(3) The recipient can check the status of the express object in the cabinet on the webpage or APP application platform after registration;
(4) The recipient can query the password for opening the cabinet received on the webpage or APP application platform after registration;
(5) Access to the logistics network of the logistics company is available.

As an alternative to the present embodiments one to four, the weighing devices or the machine vision device or the coded wireless clip 204 and the coded wireless hook 205 may be provided in different storage areas of the same cabinet; also, the movable pointing light lamp arm 301 or the vertical and horizontal coordinates display lamp row 302 or the sound and light display lamp may be provided in different storage areas of the same cabinet.

### Embodiment 5:

A control method of a smart cabinet system, wherein an object information is input into a central control module 4 through an object information input module 1, and a position of the object is input into the central control module 4 through an object position memory module 2 after the object is placed into the cabinet to establish an association relationship with the object information; and the position of the object is displayed by an object position display module 3 after the object information is retrieved by the central control module 4 upon picking up.

The method comprises the following specific steps:
A. delivery stage:
   Before delivery, object information is input into the central control module 4 by a manual input device of the object information input module 1;
   Upon delivery, the object information is read by a deliveryman with an object information reading device, after the object is placed into the cabinet, a position information of the object is obtained by the weighing devices of the object position memory module 2, that is, when the object is placed into the cabinet, a position where the object is placed is recorded bya regional weighing device located in an area where the object is pressed and one or more secondary regional weighing devices mounted in a same storage area of the cabinet according to codes of the weighting devices; the information and the position information are simultaneously input into the central control module 4 to establish an association relationship; the position information indicating a location of the cabinet where the object is located is sent to the recipient by the central control module 4 according to the object information, and in case that the cabinet is provided with a cabinet door, a password for opening the cabinet door is randomly generated which uniquely corresponds to an information of the recipient, that is, the cabinet door being opened with a password can correspond to the cabinet door being opened by a certain recipient;
B. pickup stage:
   when a recipient picks up an object, in case that the cabinet is provided with a cabinet door, the password given by the central control module 4 is used to open the cabinet door, a position of the object is indicated by the object position display module 3 to the recipient object accordingly, a light display lamp shows the position of the object, indicating the recipient to quickly find his own object, the recipient leaves or close the cabinet door in case that the cabinet is provided with a cabinet door after confirming that he picks his object.

Step B further comprises that the weight of the object picked up is automatically approved by the regional weighing device and the total weighing device. If a weight of the object picked up by the recipient is consistent with the recipient and the weight information of his object registered by the central control module, the central control module sends a message to the recipient indicating the object is successfully picked up; if not, the central control module sends a message to the recipient indicating an error is occurred during pickup and issues a password information for opening the cabinet door again and requests the recipient to pick up the object again; if the recipient refuses to execute, the central control module controls a pickup monitoring and error correction system 5 to issue an alarm message.

When the object is abnormally added, the pickup monitoring and error correction system 5 also raises an alarm.

When the olfactory sensor senses dangerous goods, the dangerous goods olfactory alarm 7 also raises an alarm.

Various information formed in steps A to B are sent to a handheld terminal of the recipient via the Internet or the Internet of Things; after the handheld terminal of the recipient is registered and approved on an APP application platform of the smart cabinet system or the recipient enters a password on the APP, the handheld terminal of the recipient can be automatically identified in an area near the cabinet.

### Embodiment 6:

A control method of a smart cabinet system, wherein an object information is input into a central control module 4 through an object information input module 1, and a position of the object is input into the central control module 4 through an object position memory module 2 after the object is placed into the cabinet to establish an association relationship with the object information; and the position of the object is displayed by an object position display module 3 after the object information is retrieved by the central control module 4 upon picking up.

The method comprises the following specific steps:
A. delivery stage:
   Before delivery, object information is input into the central control module 4 by a barcode scanning device of the object information input module 1;
   Upon delivery, the object information is read by a deliveryman with an object information reading device, after the object is placed into the cabinet, a position information of the object is obtained by the machine vision device of the object position memory module 2, that is, when the object is placed into the cabinet, an image information of delivery is recorded by a machine vision device to obtain vertical and horizontal coordinates of the object to record the position of the object; the information and the position information are simultaneously input into the central control module 4 to establish an association relationship; the position information indicating a location of the cabinet where the object is located is sent to the recipient by the central control module 4 according to the object information, and in case that the cabinet is provided with a cabinet door, a password for opening the cabinet door is randomly generated which uniquely corresponds to an information of the recipient, that is, the cabinet door being opened with a password can correspond to the cabinet door being opened by a certain recipient;
B. pickup stage:
   when a recipient picks up an object, in case that the cabinet is provided with a cabinet door, the password given by the central control module 4 is used to open the cabinet door, a position of the object is indicated by the object position display module 3 to the recipient object accordingly, a movable pointing light lamp arm automatically points to the position of the object, or a light of a vertical and horizontal coordinates display lamp row on vertical and horizontal frames of the cabinet is turned on correspondingly, indicating the recipient to quickly find his own object, the recipient leaves or close the cabinet door in case that the cabinet is provided with a cabinet door after confirming that he picks his object.

Step B further comprises that the weight of the object picked up is automatically approved by the machine vision device. If the image information recorded by the machine vision device is consistent with the recipient and the object information of his object, the central control module sends a message to the recipient indicating the object is successfully picked up; if not, the central control module sends a message to the recipient indicating an error is occurred during pickup and issues a password information for opening the cabinet door again and requests the recipient to pick up the object again; if the recipient refuses to execute, the central control module controls a pickup monitoring and error correction system 5 to issue an alarm message.

When the object is abnormally added, the pickup monitoring and error correction system 5 also raises an alarm.

When the olfactory sensor senses dangerous goods, the dangerous goods olfactory alarm 7 also raises an alarm.

Various information formed in steps A to B are sent to a handheld terminal of the recipient via the Internet or the Internet of Things; after the handheld terminal of the recipient is registered and approved on an APP application platform of the smart cabinet system or the recipient enters a password on the APP, the handheld terminal of the recipient can be automatically identified in an area near the cabinet.

### Embodiment 7

A control method of a smart cabinet system, wherein an object information is input into a central control module 4 through an object information input module 1, and a position of the object is input into the central control module 4 through an object position memory module 2 after the object is placed into the cabinet to establish an association relationship with the object information; and the position of the object is displayed by an object position display module 3 after the object information is retrieved by the central control module 4 upon picking up.

The method comprises the following specific steps:
A. delivery stage:
   Before delivery, object information is input into the central control module 4 by a RFID chip reading device of the object information input module 1;
   Upon delivery, the object information is read by a deliveryman with a wireless clip and a wireless hook, after the object is placed into the cabinet, a position information of the object is obtained by the wireless clip and the wireless hook of the object position memory module 2, that is, when the object is placed into the cabinet, a position of the objected where it is placed is recorded by the wireless clip and the wireless hook, and the object position information is input into the central control module 4; the information and the position information are simultaneously input into the central control module 4 to establish an association relationship; the position information indicating a location of the cabinet where the object is located is sent to the recipient by the central control module 4 according to the object information, and in case that the cabinet is provided with a cabinet door, a password for opening the cabinet door is randomly generated which uniquely corresponds to an information of the recipient, that is, the cabinet door being opened with a password can correspond to the cabinet door being opened by a certain recipient;
B. pickup stage:
   when a recipient picks up an object, in case that the cabinet is provided with a cabinet door, the password given by the central control module 4 is used to open the cabinet door, a position of the object is indicated by the object position display module 3 to the recipient object accordingly, a sound and light display lamp on a wireless clip and a wireless hook is turned on, indicating the recipient to quickly find his own object, the recipient leaves or close the cabinet door in case that the cabinet is provided with a cabinet door after confirming that he picks his object.

Step B further comprises that the object information of the object picked up is automatically approved by the wireless clip and the wireless hook. If the code information of the wireless clip and the wireless hook that are opened is consistent with the recipient and the object information of his object, the central control module sends a message to the recipient indicating the object is successfully picked up; if not, the central control module sends a message to the recipient indicating an error is occurred during pickup and issues a password information for opening the cabinet door again and requests the recipient to pick up the object again; if the recipient refuses to execute, the central control module controls a pickup monitoring and error correction system 5 to issue an alarm message.

When the object is abnormally added, the pickup monitoring and error correction system 5 also raises an alarm.

When the olfactory sensor senses dangerous goods, the dangerous goods olfactory alarm 7 also raises an alarm.

Various information formed in steps A to B are sent to a handheld terminal of the recipient via the Internet or the Internet of Things; after the handheld terminal of the recipient is registered and approved on an APP application platform of the smart cabinet system or the recipient enters a password on the APP, the handheld terminal of the recipient can be automatically identified in an area near the cabinet.

### Embodiment 8:

A control method of a smart cabinet system, wherein an object information is input into a central control module 4 through an object information input module 1, and a position of the object is input into the central control module 4 through an object position memory module 2 after the object is placed into the cabinet to establish an association relationship with the object information; and the position of the object is displayed by an object position display module 3 after the object information is retrieved by the central control module 4 upon picking up.

The method comprises the following specific steps:
A. delivery stage:
   Before delivery, object information is input into the central control module 4 by a manual input device or a barcode scanning device or a RFID chip reading device of the object information input module 1;
   Upon delivery, the object information is read by a deliveryman with an object information reading device, after the object is placed into the cabinet, a position information of the object is obtained by the weighing devices or the wireless clip and the wireless hook of the object position memory module 2, that is, when the object is placed into the cabinet, a position where the object is placed is recorded by a regional weighing device and secondary regional weighing devices on which the object is pressed according to the codes of the weighing devices; or when the object is placed on the wireless clip and the wireless hook, a position of the objected where it is placed is recorded by the wireless clip and the wireless hook; the information and the position information are simultaneously input into the central control module 4 to establish an association relationship; the position information indicating a location of the cabinet where the object is located is sent to the recipient by the central control module 4 according to the object information, and in case that the cabinet is provided with a cabinet door, a password for opening the cabinet door is randomly generated which uniquely corresponds to an information of the recipient, that is, the cabinet door being opened with a password can correspond to the cabinet door being opened by a certain recipient;
B. pickup stage:
   when a recipient picks up an object, in case that the cabinet is provided with a cabinet door, the password given by the central control module 4 is used to open the cabinet door, a position of the object is indicated by the object position display module 3 to the recipient object accordingly, a movable pointing light lamp arm automatically points to the position of the object, or a light of a vertical and horizontal coordinates display lamp row on vertical and horizontal frames of the cabinet is turned on correspondingly, and a sound and light display lamp on a wireless clip and a wireless hook is turned on, indicating the recipient to quickly find his own object, the recipient leaves or close the cabinet door in case that the cabinet is provided with a cabinet door after confirming that he picks his object.

Step B further comprises that the weight of the object picked up is automatically approved by the regional weighing device and the total weighing device or the object information of the object picked up is automatically approved by the wireless clip and the wireless hook. If a weight of the object picked up by the recipient is consistent with the recipient and the weight information of his object registered by the central control module, or the code information of the wireless clip and the wireless hook that are opened is consistent with the recipient and the object information of his object, the central control module sends a message to the recipient indicating the object is successfully picked up; if not, the central control module sends a message to the recipient indicating an error is occurred during pickup and issues a password information for opening the cabinet door again and requests the recipient to pick up the object again; if the recipient refuses to execute, the central control module controls a pickup monitoring and error correction system 5 to issue an alarm message.

When the object is abnormally added, the pickup monitoring and error correction system 5 also raises an alarm.

When the olfactory sensor senses dangerous goods, the dangerous goods olfactory alarm 7 also raises an alarm.

Various information formed in steps A to B are sent to a handheld terminal of the recipient via the Internet or the Internet of Things; after the handheld terminal of the recipient is registered and approved on an APP application platform of the smart cabinet system or the recipient enters a password on the APP, the handheld terminal of the recipient can be automatically identified in an area near the cabinet.

## Claims

1. A smart cabinet system comprising a cabinet (8), the cabinet being provided with a plurality of storage areas (9), **characterized in that** the smart cabinet system further comprises an object information input module (1), an object position memory module (2), an object position display module (3), a central control module (4); the central control module (4) is connected respectively with the object information input module (1), the object position memory module (2) and the object position display module (3); the object information input module (1) is configured to input an object information into the central control module (4), and the object position memory module (2) is configured to store a position of the object after being placed into the cabinet and input the position into the central control module (4) to establish an association relationship with the object information; and the object position display module (3) is configured to display the position of the object after the central control module (4) retrieves the object information upon picking up.

2. The smart cabinet system according to claim 1, **characterized in that** the object information input module (1) comprises a manual input device or a barcode scanning device or an RFID chip reading device.

3. The smart cabinet system according to claim 1, **characterized in that** the object position memory module (2) comprises a weighing device or a machine vision device or a coded wireless clip (204), a coded wireless hook (205); the weighing device comprises a total weighing device (201) mounted at a bottom of the entire cabinet, a coded regional weighing device (202) mounted respectively in each storage area (9) of the cabinet, one or more coded secondary regional weighing devices (203)mounted in a same storage area of the cabinet; the machine vision device, the wireless clip (204) and the wireless hook (205) are respectively mounted on a frame of the cabinet; the weighing device, the machine vision device, the wireless clip (204), and the wireless hook (205) are respectively connected to the central control module (4).

4. The smart cabinet system according to claim 3, **characterized in that** the object position display module (3) comprises a light display lamp or a movable pointing light lamp arm (301) mounted on a frame of the cabinet, or a vertical and horizontal coordinates display lamp row (302) mounted on vertical and horizontal frames of the cabinet, or a sound and light display lamp mounted on the wireless clip and the wireless hook.

5. The smart cabinet system according to claim 1, **characterized in that** the smart cabinet system further comprises a pickup monitoring and error correction system (5), the pickup monitoring and error correction system (5) is connected to the central control module (4), and the pickup monitoring and error correction system (5) is configured to raise an alarm when the object picked up upon picking up does not match an information recorded by the object position memory module (2) or an object is abnormally added.

6. The smart cabinet system according to any one of claims 1 to 5, **characterized in that** the smart cabinet system further comprises an olfactory sensor (6) for distinguishing dangerous goods, and the olfactory sensor is connected to the central control module (4) is connected; the central control module (4) is also connected with a dangerous goods olfactory alarm (7); the central control module (4) is also connected to the Internet and the Internet is connected to the Internet of Things; and the smart cabinet system is provided with an APP application platform and Wifi.

7. A control method of a smart cabinet system, **characterized in that** an object information is input into a central control module (4) through an object information input module (1), and a position of the object is input into the central control module (4) through an object position memory module (2) after the object is placed into the cabinet to establish an association relationship with the object information; and the position of the object is displayed by an object position display module (3) after the object information is retrieved by the central control module (4) upon picking up.

8. The control method of the smart cabinet system according to claim 7, **characterized in that** the method comprises the following specific steps:
A. delivery stage: upon delivery, the object information is read by a deliveryman with an object information reading device, after the object is placed into the cabinet, a position information of the object is obtained by the object position memory module (2), and the information and the position information are simultaneously input into the central control module (4) to establish an association relationship; the position information indicating a location of the cabinet where the object is located is sent to the recipient by the central control module (4) according to the object information, and in case that the cabinet is provided with a cabinet door, a password for opening the cabinet door is randomly generated which uniquely corresponds to an information of the recipient, that is, the cabinet door being opened with a password can correspond to the cabinet door being opened by a certain recipient;
B. pickup stage: when a recipient picks up an object, in case that the cabinet is provided with a cabinet door, the password given by the central control module (4) is used to open the cabinet door, a position of the object is indicated by the object position display module (3) to the recipient object accordingly, a light display lamp or a movable pointing light lamp arm automatically points to the position of the object, or a light of a vertical and horizontal coordinates display lamp row on vertical and horizontal frames of the cabinet is turned on correspondingly, or a sound and light display lamp on a wireless clip and a wireless hook is turned on, indicating the recipient to quickly find his own object, the recipient leaves or close the cabinet door in case that the cabinet is provided with a cabinet door after confirming that he picks his object.

9. The control method of the smart cabinet system according to claim 8, **characterized in that** in the delivery stage of step A, the step that the position information of the object is obtained by the object position memory module (2) comprises that when the object is placed into the cabinet, a position where the object is placed is recorded by a regional weighing device located in an area where the object is pressed and one or more secondary regional weighing devices mounted in a same storage area of the cabinet according to codes of the weighting devices; or an image information of delivery is recorded by a machine vision device to obtain vertical and horizontal coordinates of the object to record the position of the object; or the object is fixed by a wireless clip and a wireless hook to record the position of the object according to codes of the wireless clip and the wireless hook.

10. The control method of the smart cabinet system according to claim 9, **characterized in that** step B further comprises that the weight of the object picked up is automatically approved by the regional weighing device and the total weighing device, or the object information of the object picked up is automatically approved by the machine vision device, the wireless clip and the wireless hook; if a weight of the object picked up by the recipient is consistent with the recipient and the weight information of his object registered by the central control module, or the image information recorded by the machine vision device is consistent with the recipient and the object information of his object, or the code information of the wireless clip and the wireless hook that are opened is consistent with the recipient and the object information of his object, the central control module sends a message to the recipient indicating the object is successfully picked up; if not, the central control module sends a message to the recipient indicating an error is occurred during pickup and issues a password information for opening the cabinet door again and requests the recipient to pick up the object again; if the recipient refuses to execute, the central control module controls a pickup monitoring and error correction system (5) to issue an alarm message.

11. The control method of the smart cabinet system according to claim 10, **characterized in that** various information formed in steps A to B are sent to a handheld terminal of the recipient via the Internet or the Internet of Things; after the handheld terminal of the recipient is registered and approved on an APP application platform of the smart cabinet system or the recipient enters a password on the APP, the handheld terminal of the recipient can be automatically identified in an area near the cabinet.
